# EUROPEAN PATENT SPECIFICATION

(11) **EP 1 383 824 B1**
(45) Date of publication and mention of the grant of the patent: **29.10.2008**
(21) Application number: 02714369.2
(22) Date of filing: 21.03.2002
(51) Int. Cl.: C08J 5/06

(54) **COMPOSITE MATERIALS MADE FROM TREATED CELLULOSE AND PLASTIC**
VERBUNDMATERIALIEN HERGESTELLT AUS BEHANDELTER ZELLULOSE UND KUNSTSTOFFEN
MATERIAUX COMPOSITES A FAIBLE COUT, DURABLES ET RESISTANTS, FABRIQUES A PARTIR DE CELLULOSE ET DE PLASTIQUE TRAITES

(30) Priority: 22.03.2001 US 813876; 23.03.2001 IL 14223001
(43) Date of publication of application: 28.01.2004
(73) Proprietor: Cycletec Ltd, 38100 D.N. Hefer (IL)
(72) Inventor: HALAHMI, Izhar, 45297 Hod-HaSharon (IL); GROSS, Mike, 45343 Hod Hasharon (IL); JACOBS, Ian Leonard, 30900 Zichron Yaacov (IL); KADOSH, Gaby, 10200 Kiryat Shmonah (IL)
(74) Representative: Vossius & Partner
(86) International application number: PCT/IB2002/000831
(87) International publication number: WO 2002/077077

(56) References cited:
- WO-A-98/03586
- GB-A- 1 042 703
- US-A- 4 376 144
- US-A- 4 791 020
- US-A- 5 140 086
- DATABASE CHEMABS [Online] CHEMICAL ABSTRACTS SERVICE, COLUMBUS, OHIO, USA; Database accession no. 132:294874, XP002223541 & JP 2000 119509 A (HOKUETSU PAPER MILLS, LTD) 25 April 2000 (2000-04-25)

## Description

This invention relates to treated fibrous porous materials and a method of obtaining the same. This invention further relates to a composite material comprising the present treated fibrous porous material and a method for preparing the same. The present invention also relates to a product made from the present composite material, a preform manufactured from the present composite and a composite structure manufactured from at least one preform of the present invention.

Organic composites are built from polymeric matrix and solid, hard particulate or fibrous reinforcement. Typical reinforcing materials are inorganic fillers such as silica, talc, alumina, glass spheres, calcium carbonate, ceramic powders, silicon carbide, inorganic fibers such as glass, carbon, ceramic, boron and organic fibers such as kevlar, cellulose, lignin, and nylon. When the particles of the added solid material are small enough and are compatible with the polymeric matrix, the properties of the mixture are nonlinear, due to the interaction polymer-particle on the molecular level (Peter L. Maul, Nanocor Incorporated, Corporate Technical Center, Arlington Heights, Illinois USA, in "Plastic nanocomposites: the concept goes commercial"). Such composite materials are termed nanocomposites and exhibit better strength and order (permeability, orientation etc.).

In order to stabilize the composition of polymer matrix and additives some mediating agent is necessary. Surfactants are known to stabilize solutions composed of immiscible solvents. The same phenomenon occurs in polymers where polymers of different molecular structure upon mixing together by melting or in solution, tend to separate into multi-phase structure resulting in a mixture having inferior physical properties compared to the original polymer components. In order to mix together mixtures of different polymers (having different basic repeating units, molecular weight, branching rate, polymers which differ in their end and pendant groups or in the nature of stereoisomerism, polymers with a different degree of crosslinking or of acid-base interactions), surfactant-like entities should be added to the polymeric mixture. These surfactant-like entities known as compatibilizers, stabilize the polymeric blend and give rise to improved mechanical, physical and chemical properties of the blend. The added compatibilizers which are polymeric, stabilize the phases and enable creating stable, homogeneous multi-phase compositions, with good stress transfer between phases, with practical value (Datta Sudhin, Loshe David J. Polymeric compatibilizers-uses and benefits in polymer blends., Hanser Publishers 1996). Compatibilizers, in addition to stabilizing polymer-polymer interactions, further serve at polymer-filler interface (Eastman publication APG-10, July 1998), and especially in polymer-cellulose interface (Andizej M. Krzysik and others, "Wood-polymer bonding in extruded and nonwoven web composite panels"). In the case where a hydrophilic filler or reinforcement like cellulose is mixed together with a hydrophobic matrix (e.g. polyethylene or polypropylene) the presence of the compatibilizer is crucial. In such a case, the compatibilizer blocks the hydroxyl groups and seals the surface of the particle (US 6,117,545; M. Krishnan & R. Narayan "Compatibilization of biomass fibers with hydrophobic materials" Mat. Res. Soc. Symp. Proc. (1992) 266, 93-104) The disadvantage of compatibilizers limiting their use is their relatively high price and high viscosity. Furthermore, the high viscosity dictates that they be mixed only in high-shear/ high-temperature equipment (extruder for example). The process of incorporating it into the complicated mixture is energy and time consuming and the targeting of the compatibilizer to a specific surface is limited. Also their formulation is very sensitive to processing conditions, and their treatment is limited to the outer surface of particles and fibers, a severe drawback when dealing with porous particles. One more drawback is that it is very difficult to target these additives to specific surface and thus high percentage of the additive is consumed on irrelevant surfaces/fillers pores.

Combinations of compatibilizer and nano or microscopic porous fillers are problematic due to the high surface area of the filler.

Another approach to stabilize a composition of polymer(s) and additives may be the use of coupling agents. These agents, unlike compatibilizers that encapsulate the particle polymer phase, are low molecular weight reactive molecules that have multifunctionality that enable the chemical bridging between solid and polymer ("Tailoring Surfaces with Silanes", Chemtech, Vol. 7, 766-778, 1977). The mode of action of the coupling agents is by forming covalent/ionic bonds to the different components. Their advantages are: good penetration into porous materials, high reactivity, inorganic compatibility, ease of application utilizing relatively low cost mixing equipment. However, they are volatile (imparting economic and environmental problems), and tend to migrate from interfaces- thus being poor compatibilizers. In addition, their chemical reactivity spectrum is rather limited.
Pretreatment of cellulosic fillers by low molecular weight reactive monomers and oligomers is described in M. Krishnan & R. Narayan "Compatibilization of biomass fibers with hydrophobic materials" Mat. Res. Soc. Symp. Proc. (1992) 266, 93-104, and in Rajeev Karnani et al., "Biofiber-Reinforced Polypropylene Composites" Polymer Eng. & Sci. (1997) 37, 476-483. The prior art use simple but relatively expensive ingredients like isocyanates or silanes. The mechanical properties of the resultant interface are brittle and the design flexibility in properties is limited. Cellulosic fiber composites and nanocomposites are described for example in US 6,103,790 - "Cellulosic microfibril reinforced polymers and their application", US 5,973,035 - "Cellulosic fiber composites", and US 6,066,680 - "Extrudable composite of polymer and wood flour".

US-A-4,791,020 discloses a composite comprising discontinued cellulose fibers dispersed in a matrix of polyethylene and bonded thereto through a bonding agent containing at least one isocyanate group

In GB 1,042,703 a lacquer or adhesive based on unsaturated polyester and organic polyisocyanate is described which comprises a product resulting from the mixture in solution in an organic solvent of an unsaturated polyester, an organic polyisocyanate, an unsaturated modifying agent having a functional grouping which is reactive with the free -NCO groupings of the polyisocyanate, and an organic peroxide.

The present invention is based on a novel concept for binding a fibrous porous material and a polymer to yield a composite material. In accordance with the invention a fibrous porous material is treated to form an interfacing component on said fibrous porous material which can then bind to the polymer. As a result of the treatment, active sites that can absorb moisture are blocked and a tight, strong and water impermeable composite product is thus obtained.

The present invention provides a treated fibrous porous material obtainable from an untreated porous fibrous material, the untreated material comprising original reactive sites, the treated material being characterized in that:
**(i)** it has a reduced number of original reactive sites as compared to the untreated material;
**(ii)** it has a reduced surface area;
**(iii)** it has a higher nitrogen content as compared to the untreated material, and
**(iv)** it comprises reactive groups capable of coupling to polymers.
In accordance with one preferred embodiment, the treated fibrous porous material has a high content of aromatic groups compared to the untreated product. The aromatic groups are preferably phenyl groups, typically forming part of styrene polymer, oligomer or cross linked network that is bound to the treated fibrous product.

Typically, the original reactive sites in the fibrous porous material are bound to an isocyanate component, which is a mono- or poly-isocyanate oligomer. In accordance with one embodiment, the mono- or poly-isocyanate groups are bound to an unsaturated polyester resin.

The treated fibrous product may be cellulose, lignin, lignocellulose natural fibers, and other bio fibers and porous powders of biological origin or mixtures thereof. A porous material that is cellulose-based natural material is a preferred embodiment of the invention. The cellulose may be in the form of wood chips, recycled paper, paper chips or powder, sawdust or mixtures thereof. According to one embodiment, the cellulose is a newsprint paper.

The treated fibrous porous material may be obtained from an untreated porous fibrous material by treating the untreated material with low viscosity organic solution that comprises, an organic solvent selected from aromatic, aliphatic, ether, ester, ketone, halogenated solvent or alcohol, an isocyanate component being a mono- or poly-isocyanate and an unsaturated resin. The unsaturated resin is typically hydroxyl, epoxy or carboxyl containing polyester, which may be aromatic. The organic solution may further comprise one or more compounds selected from the group consisting of styrene which can be an oligomer or polystyrene, vinyl monomer, organosilanes, organotitanium and organozirconium and an organic peroxide.

The invention provides a treated fibrous porous material obtainable from an untreated porous fibrous material by treating the untreated material with a low viscosity organic solution, said low viscosity organic solution comprising:
(a) a solvent selected from aromatic, aliphatic, ether, ester, ketone, halogenated solvent or alcohol;
(b) an isocyanate component being a mono- or poly-isocyanate;
(c) an organic peroxide;
(d) an unsaturated resin which is hydroxyl, epoxy or carboxyl containing polyester which may be aromatic.

The invention also provides a method of treating a fibrous porous material having original reactive sites, the method comprising mixing said fibrous porous material with a low viscosity organic solution, said low viscosity organic solution comprising (a) an organic solvent selected from aromatic, aliphatic, ether, ester, ketone, halogenated solvents or alcohol, (b) an isocyanate component being a mono- or poly-isocyanate (c) an organic peroxide and (d) an unsaturated resin, which is hydroxyl, epoxy or carboxyl containing polyester, which may be aromatic. The organic solution may further comprise one or more compounds selected from the group consisting of styrene which can be an oligomer or polystyrene, vinyl monomer, organosilanes, organotitanium and organozirconium.

The invention still further provides a composite material that comprises the instant porous fibrous material and a polymer. An interfacing component comprising at least one nitrogen-containing agent is covalently bound to said porous fibrous material and to said polymer, whereby said fibrous material in said composite comprises a higher content of nitrogen as compared to identical fibrous material of a composite made of said identical fibrous material and said polymer without said component.

The nitrogen-containing agent in said composite material is typically comprised of mono- or poly-isocyanate. The mono- or poly-isocyanate is typically bound to a polyester resin.

In accordance with a preferred embodiment of the invention, the composite material is also characterized in that the interfacing component comprises also an agent that has aromatic groups, whereby the fibrous material in said composite material comprises a higher content of aromatic groups as compared to an identical fibrous material of a composite material that is made from the identical fibrous material and the polymer but without said interfacing component. Said agent with aromatic groups is typically an aromatic resin such as polystyrene.

In accordance with another preferred embodiment, said component is comprised also of a polyester resin, for example, hydroxyl, epoxy or carboxyl containing polyester.

The polymer in the composite material may be one or more of the group consisting of thermoplastic or thermosetting polymers, their mixtures or multilayered or multicomponent products or mixtures thereof.

Examples of the polymer are one or more of the group consisting of polyethylene and copolymers thereof, polypropylene and copolymers thereof, polystyrene and copolymers thereof, polycarbonate, silicones and copolymers thereof, polybutylene, polyethyleneterphtalate, polyurethane, epoxy, unsaturated polyesters, vinyl esters and ethers, acrylic resins and copolymers thereof, polyamides, phenolics, amino resins, alkyds, polyimides, polyethers, polyvinyl chloride and copolymers thereof, nylon and mixtures thereof.

A suitable source for said polymer is industrial or domestic waste.

The present invention also provides a method for preparing a composite material comprising a fibrous porous material and a polymer, the method comprising:
(i) mixing said fibrous porous material with a low viscosity organic solution, said low viscosity organic solution comprising (a) an organic solvent selected from aromatic, aliphatic, ether, ester, ketone, halogenated solvent or alcohol, (b) an isocyanate component being a mono- or poly-isocyanate, (c) an organic peroxide and (d) an unsaturated resin, wherein the unsaturated resin is hydroxyl, epoxy or carboxyl containing polyester, which may be aromatic, to yield a treated fibrous material;
(ii) mixing said dried treated material with the polymer;
(iii) heating the mixture to melt said polymer; and
(iv) shaping the molten composition into a desired form.

The present invention also provides a method for preparing a composite material where a drying process precedes the step of mixing the treated fibrous porous material with a polymer.

The present invention also provides a product made from the composite material of the invention or prepared by the above method for preparing such a composite material. Said product may be an extruded beam, tube or profile, a preformed sheet or may be in the form of pellets. The product of the invention may be formed into a variety of different finished products, non-limiting examples being plate, board, transportation pellet, a film, an automotive interior trim or a construction element Additionally, the finished product of the invention may also be in the form resembling that of paper, in the form of natural fibers or plastic, may be in the form resembling old corrugated cardboard, may be in the form of white brown paper or may be prepared in the form to resemble wood.

The present invention further provides a preform manufactured from said composite, by shaping into a mold, roll or a continuous belt to yield a sheet made of said composite material.

The present invention also provides a preform manufactured from the composite of the invention, by impregnating said composite into woven or non woven fabric, to yield a sheet made of said fabric and said composite material. Examples of such a fabric may be a fabric consisting of glass, ceramic material, kevlar, carbon, metal, nylon, cellulose-based material, in a mold, rolls or continuous belt.

The present invention further provides a composite structure that is manufactured by heating at least one of said preform to a softening point, e.g. a temperature between about 130°C to about 230°C, and then pressing the pre-heated sheet in a mold, namely in a compression molding fashion, or by heating two or more different ones of said preform to a softening point and pressing the pre-heated sheets in a mold, to give a multilayered structure.

A system for carrying out the above-defined methods is described. The system for carrying out the method for treating the porous fibrous material comprises at least one sub-system for reacting said fibrous material with said organic solution and at least one sub-system for removing the solvent and drying said fibrous material.

The system for carrying out the method for preparing said product, comprises a sub-system for carrying out process steps (ii) - (iv) as defined above, typically as an extrusion system.

In order to understand the invention and to see how it may be carried out in practice, a preferred embodiment will now be described, by way of non-limiting example only, with reference to the accompanying drawings, in which:
**Fig. 1** is a schematic representation of a cellulose fiber treated in accordance with the invention.
**Figs**. **2A** and **2B** are schematic representations of the resulting microscopic structure obtained by the present invention (Fig. 2B) as compared to the structure obtained by using prior art compatibilizers (Fig. 2A).
**Fig. 3** is a schematic representation of the microscopic structure of a portion of a composite material in accordance with an embodiment of the invention.
**Fig. 4** is as flow chart describing one embodiment of a method in accordance with the invention.
**Fig. 5** is a flow chart of a method in accordance with another embodiment of the invention.
**Fig. 6** is a flow chart of a method in accordance with a further embodiment of the invention.
**Fig. 7** is a flow chart of a method in accordance with a further embodiment of the invention.
**Figs. 8A** and **8B** show a comparison between regular paper and paper treated according to the invention by means of their water absorption.
**Figs. 9A** and **9B** show a comparison between a composite of the prior art . (polypropylene based composite with cellulose) and composite obtained according to the invention by means of their impact.
**Figs. 10A** and **10B** show profiles of heat distortion temperatures of composites according to the present invention and known commercial polymers.

The invention will now be described with reference to some non-limiting specific embodiments. The invention will first be illustrated in reference to the attached drawings to be followed by a more detailed description below.

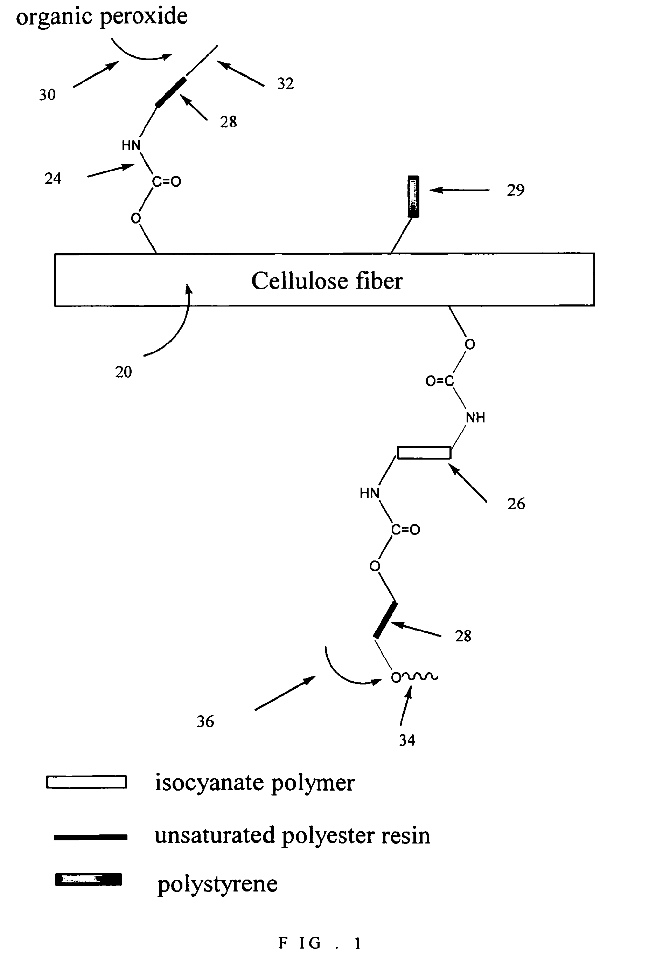

Reference is first being made to **Fig. 1**, which is a schematic representation of a cellulose fiber **20** treated in accordance with the invention. The cellulose fiber has a plurality of original reactive sites, that in this case are hydroxyl groups, which if left free may absorb moisture. By reacting a cellulose fiber with mono-isocyanate group **24** or a poly-isocyanate group **26**, the isocyanate residues bind to the hydroxyl groups. The mono- isocyanate **24** or the poly-isocyanate group **26** can also bind a resin, such as an unsaturated polyester resin **28**. In this way these reactive sites assist in the subsequent binding of the fiber to a polymer.

Use, in accordance with a preferred embodiment of the invention, is also made by an aromatic resin such as polystyrene **29** which has an affinity to the lignin phase of the fiber and binds thereto by affinity association. The aromatic resin can also bind to the polymer matrix.

The polyester resin can react with polymers by the assistance of an organic peroxide, as represented by arrow **30**, to yield additional reactive groups on the polyester resin. The polyester resin can bind to polymers represented by straight line **32** and wavy line **34**. It should be noted that while reaction assisted by an organic peroxide increases the number of reactive groups that can bind to a polymer, the unsaturated polyester resin can also bind to the polymer even without first reacting it with the organic peroxide. The polyester may react with condensation polymers via transesterification or transamidation as represented by arrow **36**.

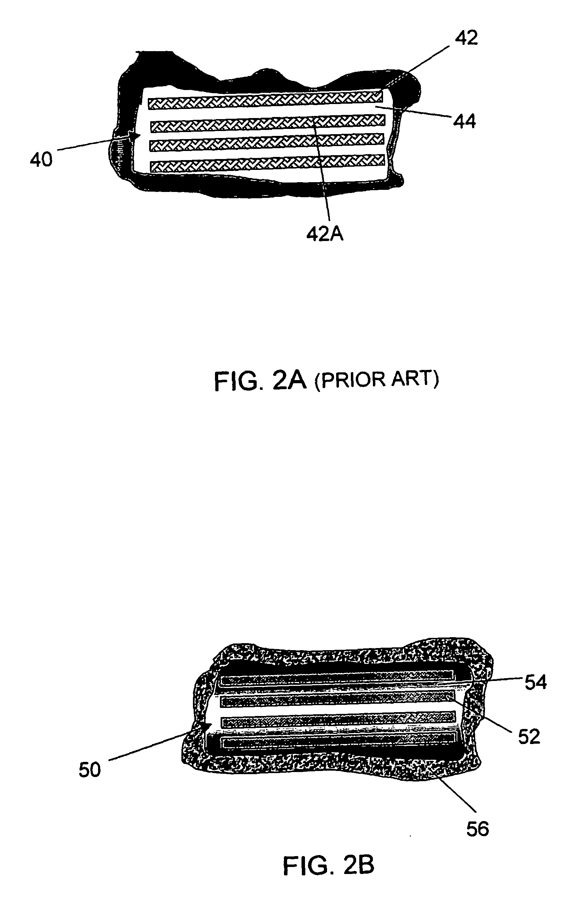

Reference is now being made to **Fig. 2A** and **Fig. 2B** showing a composite material prepared in accordance with the prior art (Fig. 2A) and such prepared in accordance with the invention (Fig. 2B). As seen in Fig. 2A, a fibrous product, generally designated **40** consists of a number of fibrils **42** and pores **44** between them. The compatibilizers that are used in accordance with the prior art are very viscous and thus only coat the outer face of the fibrous particle **40** to yield a coating **46** and do not penetrate into the pores **44**. Thus, by way of example, fibril **42A**, in the particle's interior, is not bound to the compatibilizers, and consequently will also not be bound to the polymer, it will absorb humidity and the internal structure will have no mechanical contribution to the composite material.

In contrast, in accordance with the invention, the treating organic solution has a low viscosity and can penetrate all the pores **54** within the fibrous particle **50.** Thus, in addition to a coating polymeric phase **56**, which bonds the external surface of the particle, all the internal fibrils **52** are bound to a polymeric phase as well. In this way, in addition to increased strength, the sites that can otherwise absorb moisture are thereby blocked.

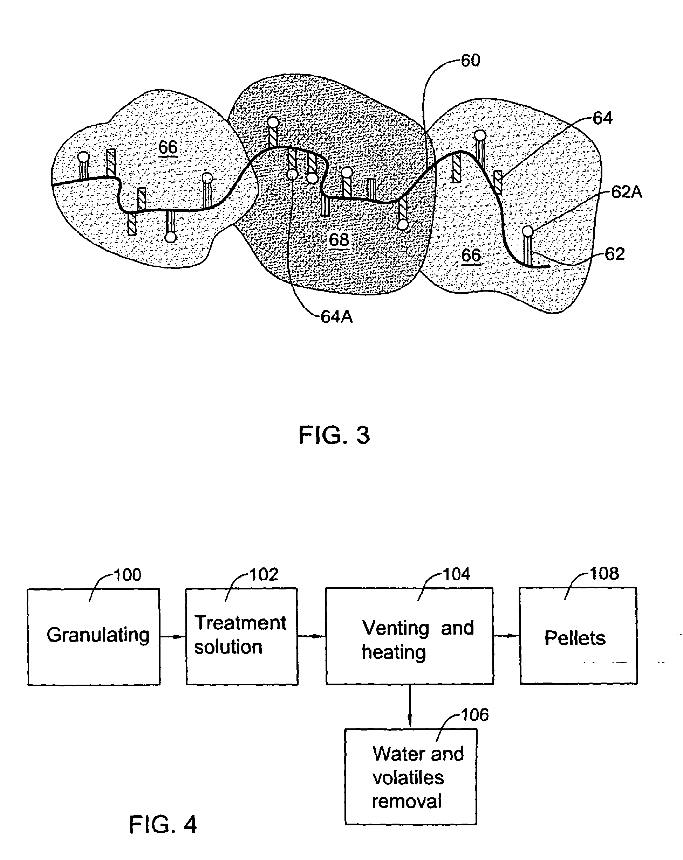

The fact that each reactive group in the fibrous porous material may play a role in bonding to the polymer, may be used to advantage in order to achieve stronger composite material and also to advantage in binding together non compatible polymers. This is illustrated schematically in the **Fig. 3**. Bound to fibrous porous fiber **60** are a plurality of pendant groups, each of which is covalently bound through an isocyanate group (urethane, allophanate or biuret linkage) (see Fig. 1) to the hydroxyl residue of the fibrous backbone. In this example, there are two different groups, **62** and **64**. **62** can bind, by forming a bond **62A** with a polymer **66** while groups **64** can bind through bond **64A** with polymer **68**. Thus, when mixing these two different polymers together, a composite material is formed with these two polymers that are held together in a single matrix by the pretreated fibrous porous material. It should be noted that without such a fiber polymers **66** and **68** would not bind to one another.

In accordance with the prior art, where the compatibilizer coats the entire external surface of the fiber, and the compatibilizer is soluble in the polymer phases, the ability to use fibers to bond together different polymers, is more limited. Thus, a composite material prepared with different polymers in accordance with the prior art will be less strong than that prepared in accordance with the invention.

In the following, some embodiments of methods in accordance with the invention will be described. In these embodiments, the starting materials are different forms of paper. It should however be appreciated that the invention is not limited thereto.

Reference is first being made to **Fig. 4**. At a first step **100**, paper is granulated into chips with a typical diameter of about 0.5 to about 5 mm. Granulation may be done as known *per se*. At a next step **102**, a treatment solution, which is a low viscosity organic solution that comprises mono- or poly-isocyanate, and organic solvent in an unsaturated resin is sprayed onto the paper. A typical example is the solution referred to below as CCA, which includes the aforementioned ingredients as well as styrene and organic peroxide. It should be noted that the styrene and organic peroxide are not essential although their inclusion is preferred. Other agents that may be included in the treatment solution are vinyl, organosilanes, organotitanium or organozirconium. In addition to spraying, the treatment solution may be applied in a variety of different ways such as simple soaking, atomizing, etc.

Optionally, the treated paper may then be dried although this is not essential. In a next step, **104** the treatment paper is mixed with a polymer and heated. The mixing and heating apparatus should be provided with large venting openings to allow release of humidity and solvents that are removed at **106**. The resulting products are formed into pellets that are paned at **108** which can then be used for further processing by sheet rolling, in-line molding, or by injection molding. The resulting product can be shaped into sheet or tube or profile.

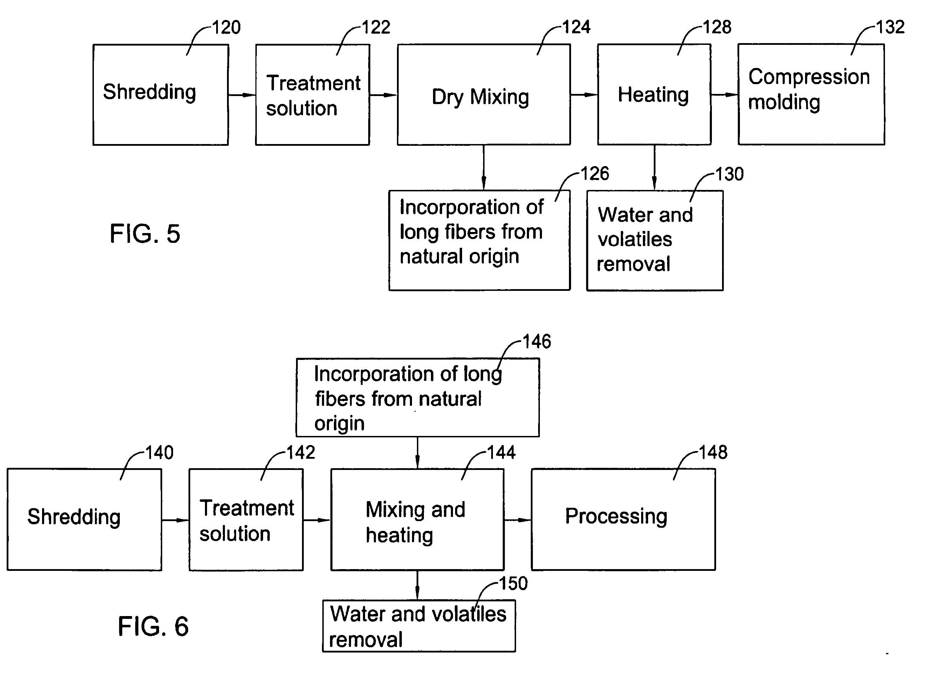

Reference is now being made to **Fig. 5** showing another embodiment of a method in accordance with the invention. At a first step **120**, paper is shredded into chips of a size between about 0.5 to about 5 mm and then treated with a treatment solution at **122**, similarly as **102** in Fig. 4. The treated paper is then dried and then the solution should be ready for dry mixing at **124** with a plastic material in a mixture to form a flat mat. During this process short fibers from a natural origin are admixed as represented by a block **126**. At a next step **128**, the mixture is heated on a conveyor microwave or IR heater, and water and volatiles are removed, typically in line, as represented by block **130**. The heated mixture is then subjected to compression molding at **132** to yield a sheet made of a composite material.

Reference is now being made to **Fig. 6**. At a first step **140** brown paper or **OCC** (old corrugated cardboard) paper is first shredded into chips of a size of 0.5 to about 5 mm and then the chips are subjected to a treatment solution at **142** similarly as in step **102** of Fig. 4. The treated paper is then, at **144**, mixed with a plastic material while admixing also long fibers from a natural origin, as represented by block **146**. Water and volatiles are continuously removed, at **150**. After mixing and heating at **144**, the so-formed composite material may be, at **148**, converted into pellets, profiles, subjected to sheet rolling, in-line molding or injection molding. In case of in-line molding or injection molding, the mixing and heating step **144** and the processing step **148** may be conducted continuously within an extruder.

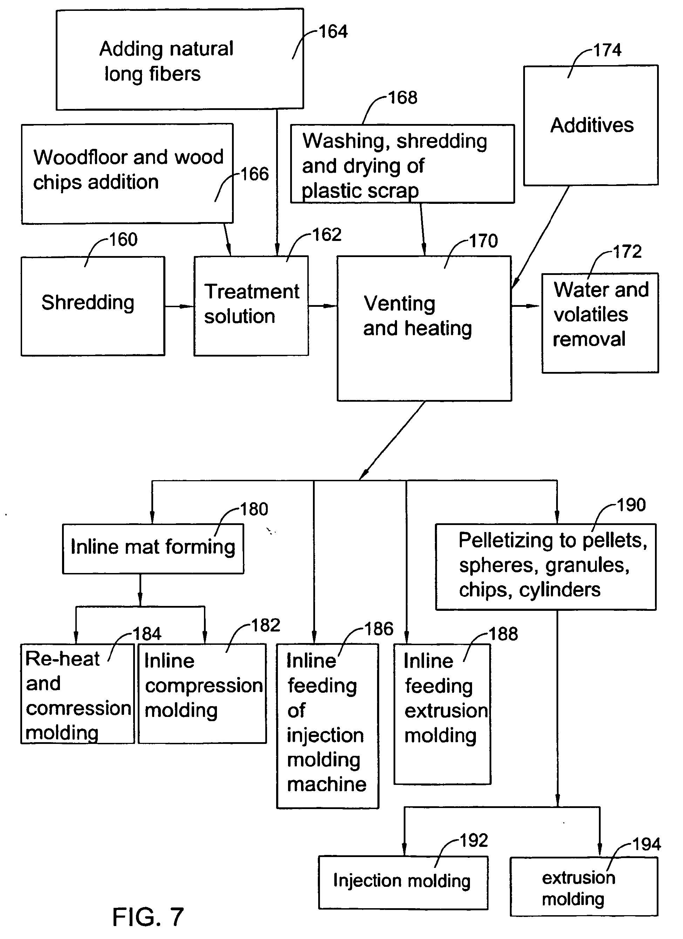

Reference is now being made to **Fig. 7**. At a first step **160**, newsprint paper, brown paper or OCC paper is first shredded into chips having a size of about 0.5 to about 5 mm. The shredded paper is then contacted with a treatment solution at **162** similarly as in **142** of Fig. 6. Natural fibers such as hemp, flax, sizal, kenaf, are added as represented by block **164**, in order to impart extra strength and impact resistance to the subsequently formed composite material. In addition, wood form and wood chips may be added, as represented by block **166**, to impart extra strength and better wood like look and feel to subsequently form composite material. The polymer material in this embodiment is virgin, domestic or industrial waste which is initially treated at **168** by washing, shredding and drying to yield chips having a diameter of about 0.5 to 15 mm. These washed, shredded and dried chips are then mixed with the shredded paper, and in addition natural fibers and the wood form or wood chips and all are mixed together at **170** in a heated vessel that has typically a big vending opening to allow removal of water and volatiles represented by block **172.** Potentially, additives such as additional fibers, pigments, flame-retardants, fillers, stabilizers, and others may be added, as represented by block **174.**

The heated mixture may then be subsequently processed in a number of different ways. In accordance with one embodiment, this material may then be subjected to in-line mat forming **180** and the so formed material may then be subsequently subjected to in-line compression molding **182** or may be reheated and only then subjected to compression molding as represented by block **184.** Additionally, the material may be fed directly into an injection-molding machine **186** or a profile- extrusion machine **184.**

By a further embodiment, the mixed and treated material obtained at **170** may be pelletized into a variety of different forms at **190** and these pellets may then be shipped and then fed into an injection molding machine **192** or an extrusion molding machine **194.**

The present invention provides a treated fibrous porous material for use as a reactive additive for composite materials. The treated fibrous porous material serves as an additive for the manufacturing of composites. The untreated fibrous porous material has a defined micro/nanostructure with a high aspect ratio, good internal hydrolytic stability and high strength and modulus. The treated material has reactive sites such as but not limited to hydroxyls, acidic or basic groups, ethers, esters, epoxides, amines, mercaptans or reactive double bonds. These external reactive groups serve as coupling sites to different polymers and due to the high aspect ratio, stabilize different polymeric phases onto the same fiber - thus "compatibilize" it in a unique combined mechanical/chemical compatibilization effect (Fig 3). Such an untreated fibrous porous material may be selected from cellulose, lignin, lignocellulosic materials, and other bio fibers and porous powders of biological origin or their mixtures. Preferably, the porous material is cellulose or lignocellulose, which may be in the form of wood powder, newsprint material, paper chips or powder, sawdust or their mixtures. Most preferably the porous material is newspaper or old corrugated cardboard (OCC). The conversion of the fibrous porous agent to a useful reactive additive or filler for composites can be carried out by treating the fibrous porous material with a low viscosity organic solution comprising a solvent selected from aromatic, aliphatic, ethers, esters, ketones, halogenated solvents and alcohols, an isocyanate component being a mono- or poly-isocyanate and an unsaturated resin. The low viscosity organic solution may further comprise one or more compounds selected from an organic peroxide, styrene monomer, oligomer or polystyrene, and vinyl containing monomers. The unsaturated resin may be a hydroxyl or carboxyl containing unsaturated polyester resin, which may be aromatic. The creating solution treats the entire porous material (Fig. 2B) unlike known compatibilizers, which modify only the surface while the inner porous structure, is untreated as demonstrated in Fig. 2A (prior art). The organic solution with its contents hereinafter defined as CCA (Cycletec Coupling Agent) may be regarded as a compatibilizer that effectively interfaces each and every fiber and not only the outer surface. Unlike polymeric compatibilizers that are miscible in the polymeric ingredients, thus a competition between phases and interphases occurs, the CCA treated porous fibers/powders, function as reinforcement and compatibilizer at the same time. A fibril that has multifunctionality and crosses two phases, reinforce them but also limit their tendency to separate. The composite material is comprised of a polymeric matrix and the treated fibrous porous material. The matrix may be thermoplastic or thermosetting polymers. A good source for low cost plastics for making such composites is plastic waste, especially post consumer waste.

Thus the present invention makes use of a reactive, low cost, highly penetrating coupling agent, with strong, hydrolytic stable and tough backbone, and a wide spectrum of molecular weights, from 100 Dalton to 100000 Dalton. It has the simplicity of application of coupling agent with the compatibilization capability of high molecular weight compatibilizers. The mode of action of the compatibilizer of the present invention is that the unsaturated polyesters react with polyolefins due to grafting reaction initiated by peroxide at elevated temperatures, and with thermoplastic polyesters due to trans-esterification, and reinforce the internal porous nanostructure of the fibers, thus eliminate the need to mix very aggressively with the thermoplastic matrix. The isocyanate compound reacts rapidly with the hydroxyls in the filler, and with the hydroxyl or carboxyl groups in the unsaturated polyester, and thus acts as a coupling agent and as a crosslinker to the polyester. A covalent bond is created between the cellulose and the polyester-isocyanate network. Due to the high affinity of the isocyanate to the hydroxyl groups, the resulting treated filler is extremely hydrophobic and hydrolytically stable. The aromatic nature of the unsaturated polyester and of the MDI based isocyanate are responsible to the outstanding chemical and hydrolytic stability. The styrene monomer functions as a solvent/carrier and reacts with styrenic polymers in the matrix (thus function as coupling agent) and, with the lignin phase in the filler. The resulting treated fibrous porous material is a composite nano/microstructure that has balanced properties from the nano scale to the macroscopic scale. Due to the high reactivity of the styrene and the unsaturated poyester, the treated fibrous porous material is reactive with polyolefines, styrenics, vinyl polymers, PET and polyurethane. The amount of added solvent forming the treating solution is from about 0.01 to about 20g for each 100g of fibrous porous material, and from about 0.1g to about 25g of the solution for each 100g of fibrous porous material.

It should be understood that the inner part of the fibrous porous material treated by CCA is modified. The inner fibrils or particles, which are untreated by common compatibilizer, are chemically modified and physically reinforced by the solvent assisted system. Furthermore, the pores between fibers, which are left untreated by the compatibilizer of the prior art due to the fact that the compatibilizer cannot penetrate inside, are filled/modified by the various ingredients so as to form an inner cross-linked nanocomposite network. In addition, the filling of the pores derives water and humidity out from the pores. The reduced surface area, the limited permeability to oxygen and the urethane groups, make the treated cellulose resistant to oxidation and much less flammable. This major change in the inner part of the fibrous porous material has significant benefits.

Following the treatment of the fibrous porous material with CCA, the solvent may be removed. The resulting treated material, which may be a powder or chip depending on the starting material, which can be regarded as a stand alone product is hydrophobic and may be stored at ambient temperature for a period of a few months with no decrease in the chemical reactivity. The water uptake is negligible, even when high surface area cellulosic powders are treated.

The CCA treatment reduces dramatically the surface area and the permeability of oxygen. Thus, cellulose based fillers and fibers treated by CCA are less flammable and the composites made there from are less flammable, and the tendency of the filler to burn during mixing/molding, is minimized. Moreover, the CCA contains cyanurate forming groups thus creating a potentially intumescing flame retardant (FR).

The fibrous material is dry, hydrophobic and does not have to be dried prior to the conduction of the next step of reaction with the polymer to form the composite material. Such a pre-drying stage is expensive and is a known bottleneck in the process of composites made from plastics and cellulose fillers-woodflour for example.

Due to the fact that the CCA treated fibers are highly reactive, a compatibilization takes place during short residence times with the molten plastics. There is no need for application of massive mechanical energy and expensive dedicated equipment (usually co/counter/conical twin screw extruder) to force the molten polymer into the fibrous porous material. The CCA treated filler/fiber is created at ambient conditions with minimal or any mechanical energy. Unlike other cellulose filled composites that require aggressive and expensive extruders - mostly high L/D twin screws, the CCA process needs only 5-20 % of the energy and can be manufactured in all extrusion machines including short L/D, single screws which are dramatically cheaper in capital cost and energy consumption.

The fact that the treated fiber is already a composite material by itself, enables the use of coarse chips or powder thus saving massive milling energy usually involved in prior art. The treatment of the fibrous porous material can be done on 2-10 mm granulated chips or powder. Due to the high degree of modification and impregnation, very simple and cost-effective mixing machines are possible (dry blend with polymer powder followed by heating and molding or single screw extruder or single screw continuous mixer). Figures 4-7 demonstrate some non-limiting possible production processes, which may be carried out.

The invention will now be described by the following non-limiting examples.

### EXAMPLES

### Example 1: Composite sheet made from CCA treated newsprint and granulated commingled post consumer plastic, by compression molding

Cyletec Coupling Agent 1 (CCA1, produced by Cycletec Ltd., Israel) was prepared The CCA1 was obtained by mixing 2.37 kg unsaturated polyester resin containing hydroxyl and/or carboxyl reactivity, 120 gr polyisocyanate (MDI oligomer), 36 gr of organic peroxide (dicumyl peroxide) and 630 gr of organic solvent (butyl acetate). The solution was mixed with 21.8 kg of newsprint chips (2-5 mm), in planetary mixer at ambient temperature for 10 minutes. 25.7 kg of post consumer plastic mixture (90% HDPE, 5% PP, 5% packaging multilayered material) chopped to 2-5 mm chips were added and mixed for 10 min. The butyl acetate was regenerated by vacuum/condensation at 80°C. The mixture was heated to 135°C under a pressure of 10 atm for 5 min to create a packed preform. The preform was heated to 150°C for 45 minutes in a convention oven until all polymer chips were softened and tacky, and pressed at 180°C under a pressure of 45 atm for 5 minutes and the demolding temperature was 70°C. The material is stiff with flexural modulus of 2550 MPa and flexural strength of 45 MPa. Water absorption is less than 0.5% (despite the fact that about 50% of the material is cellulose). Unlike standard cellulose based composites that suffer from oxidation (burning) of the cellulose during molding, this composite material was bright-colored and had no smell of smoke.

Very similar results were achieved when a virgin HDPE was used as the polymer matrix.

### Example 2: Composite material made from CCA treated newsprint and polyethylene, by extrusion compounding. (Reference to Cycletec compound CD-10)

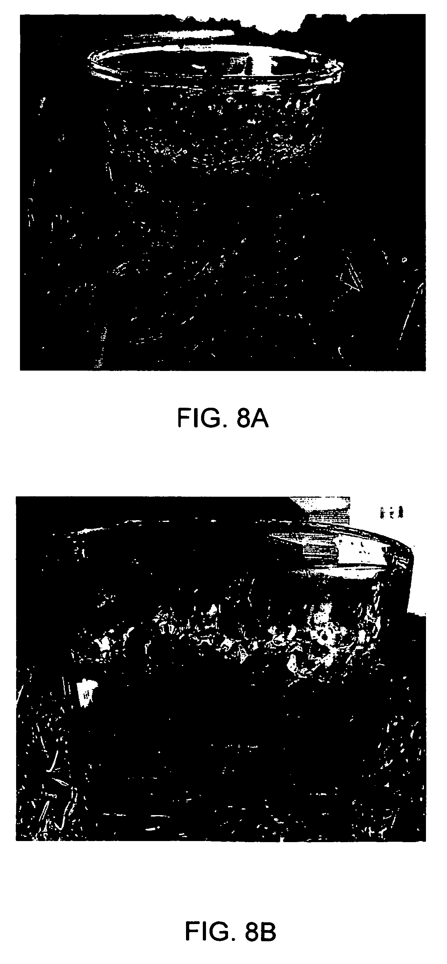

Cycletec Coupling Agent (CCA, produced by Cycletec Ltd., Israel) was prepared. The CCA was obtained by mixing 2.37 kg unsaturated polyester resin containing hydroxyl and /or carboxyl reactivity, 120 gr isocyanate (MDI olygomer), 36 gr of organic peroxide (dicumyl peroxide) and 630 gr of organic solvent (butyl acetate) The solution was mixed with 21.8 kg of newsprint chips (2-5 mm), in a planetary mixer at ambient temperature for 10 minutes. The butyl acetate was regenerated by vacuum/ condensation at 80°C. The resulting treated material is hydrophobic as can be understood from comparing the adsorption/sinking of untreated newsprint in water to the total floating of the CCA treated newsprint (see **Fig. 8**)

The mixture was fed into a co-rotating twin screw extruder (Sinoalloy, 50 mm, temp. 150-200°C along the extruder) with HDPE resin and processing aid (68.5 % HYPE resin, MFI = 6 + 1.5% LDPE resin as lubricant + 30% CCA treated newsprint) and shaped into 3 mm diameter strands and cut to 3-5 mm pellets. The pellets were dried at 100°C for 12 hrs, then re-heated to 180°C, and molded at 140°C (mold temperature), 8 ton force for 30X30 mold size, held for 5 min. Demold temperature was 90°C.

The obtained material is stiff and strong with flexural strength of 35 MPa, modulus of 1545 MPa and very smooth shiny consistency. The water absorption after 24 hrs at ambient was 0.1-0.4%.

### Example 3: Composite material made from 30% CCA treated newsprint and 70% commingled polyolefin plastic scrap (Reference to Cycletec compound CD-73)

CCA composition: 500 gr of unsaturated polyester (resin 555 by Makhteshim) + 200 gr MDI isocyanate resin (Desmodur 44/20 MDI by Bayer) + 7 gr dicumyl peroxide + 100 gr butyl acetate. The CCA was sprayed by airless atomizer onto 10 kg paper (2-5 mm dry newsprint chips) during mixing in planetary mixer. The mixture was mixed for further 10 minutes and dried at 100 °C for 4 hrs. The treated newsprint chips were mixed with plastic granules obtained from blow molded colored bottles (90-95% HDPE) at a ratio of 30% weight newsprint and 70% weight plastic in a co-rotating twin screw extruder (Sinoalloy, 50 mm, temp. 150-200°C along the extruder) into 3 mm diameter strands and cut to 3-5 mm pellets. The pellets were dried at 100°C for 12 hrs, then injection molded by standard machine to give dog-bone shaped samples with very smooth consistency with no burning of paper. The properties of the molded sheets are:

| **Flexural strength (MPa)** | **Flexural Modulus (MPa)** | **Tensile strength (MPa)** | **Tensile Modulus (MPa)** | **Elongation at break %** | **Notched Izod Impact (J/m)** | **applications** |
|---|---|---|---|---|---|---|
| 45-50 | 2000-2200 | 25-30 | 2300-2500 | 3-5 | 70-100 | Injection molding, extrusion, compression molding |

### Example 4: A composite material made from 50% CCA treated newsprint and 50% PP copolymer (Reference to Cycletec compound CD-82)

CCA composition: 500 gr of unsaturated polyester (resin 555 by Makhteshim) + 200 gr MDI isocyanate resin (Desmodur 44/20 MDI by Bayer) + 7 gr dicumyl peroxide + 100 gr butyl acetate. The CCA was sprayed by airless atomizer onto 10 kg paper (2-5 mm dry newsprint chips) during mixing in planetary mixer. The mixture was mixed for further 10 minutes and dried at 100 °C for 4 hrs. The treated newsprint chips were mixed with PP granules (Capilene SU75AV by Carmel Olefins, Israel) at a ratio of 50% weight newsprint and 50% weight plastic in a co-rotating twin screw extruder (Sinoalloy, 50 mm, temp. 150-230 C along the extruder) into 3 mm diameter strands and cut to 3-5 mm pellets. The pellets were dried at 100 °C for 12 hrs, then injection molded by standard machine to give dog-bone shaped samples with very smooth consistency with no burning of paper. The properties of the resulting composites are:

| **Flexural strength (MPa)** | **Flexural Modulus (MPa)** | **Tensile strength (MPa)** | **Tensile Modulus (MPa)** | **Elongation at break %** | **Notched Izod Impact (J/m)** | **applications** |
|---|---|---|---|---|---|---|
| 40-45 | 2300-2700 | 20-25 | 2700-3100 | 2-3 | 40-50 | Injection molding, extrusion, compression molding |

### Example 5 - A wood like composite material made from CCA treated OCC (old corrugated cardboard) and PP copolymer (Reference to Cycletec compound CD-118).

CCA composition: 600 gr of unsaturated polyester (resin 555 by Makhteshim) + 100 gr MDI isocyanate resin (Desmodur 44/20 MDI by Bayer) + 7 gr dicumyl peroxide + 100 gr butyl acetate. The CCA was sprayed by airless atomizer onto 10 kg paper (0.5 mm dry OCC powder) during mixing in a planetary mixer. The mixture was mixed for further 10 minutes, and talc powder was added (170 gr), and dispersed on the wet powder. The talc increases the flow of the powder and prevents bridging problems during feeding to the extruder. The treated fibers were dried at 100°C for 4 hrs. The treated paper powder was mixed with PP granules (Capilene SU75AV by Carmel Olefines, Israel) at a ratio of 35 weight powder and 70 weight plastic in a co-rotating twin screw extruder (Sinoalloy, 50 mm, temp. 150-230°C down the extruder) into 3 mm diameter strands and cut to 3-5 mm pellets. The pellets were dried at 100°C for 12 hrs, then injection molded by standard machine to give dog**-**bone shaped samples with very smooth consistency with no burning of paper. The properties of the resulting composites are:

| **Flexural strength (MPa)** | **Flexural Modulus (MPa)** | **Tensile strength (MPa)** | **Tensile Modulus (MPa)** | **Elongation at break %** | **Notched Izod Impact (J/m)** | **applications** |
|---|---|---|---|---|---|---|
| 40-45 | 2300-2700 | 20-25 | 2700-3100 | 2-3 | 45-50 | Injection molding, extrusion, compression molding |

### Example 6: Composite material made from treated newsprint, and commingled plastics as granulated scrap (PVC/ABS/PE/PS) by simple mixing at ambient, and compression molding.

Cycletec Coupling Agent 1 (CCA1, produced by Cycletec Ltd., Israel) was prepared. The CCA1 was obtained by mixing 2.37 kg unsaturated polyester resin containing hydroxyl and/or carboxyl reactivity, 120 gr polyisocyanate (MDI oligomer), 36 gr of organic peroxide (dicumyl peroxide) and 630 gr of organic solvent (butyl acetate). The solution was mixed with 21.8 kg of newsprint chips (2-5 mm), in a planetary mixer at ambient temperature for 10 minutes. The butyl acetate was regenerated by vacuum/ condensation at 80°C. Mixed plastic chips (couples of two immmiscible polymers - see table) were introduced and the mixture was blended in a planetary mixer for further 10 minutes. The resulting mixture was pressurized under a pressure of 10 atm at a temperature of 35°C for 5 minutes to create a packed preform. The preform was preheated to 150°C and pressurized at 180°C under a pressure of 45 atm for 50 min. The demolding temperature was 70°C. The mechanical properties are described in Table I.

**Table I: Physical properties of starting materials and composite materials obtained in Examples 1 to 4:**

| **Description** | **Flexural Strength (MPa)** | **Flexural Modulus (MPa)** |
|---|---|---|
| ABS (MFI 11)-blank (without newsprint) | 43.49 | 1409 |
| ABS/45% Paper - without treatment with CCA1 | 25.59 | 1968 |
| ABS/Paper+ (treated by CCA1) | 41.62 | 3395 |
| [ABS:HDPE(50:50)]/45% Paper (CCA treated) | 38.12 | 2776 |
| PS | 40.84 | 2196 |
| PS/45% Paper without treatment with CCA1 | 15.27 | 1670 |
| PS/ Paper + CCA | 29.17 | 3591 |
| HDPE (MFI 7) | 21.74 | 818.4 |
| [PS:HDPE(50:50)]/45% Paper(CCA treated) | 40.25 | 3282 |
| PVC (unplasticized) | 22.76 | 2912 |
| [PVC:HDPE(50:50)]/45% Paper - without treatment | 23.18 | 2938 |
| PVC:HDPE(50:50)/40% Paper (CCA created) | 51.78 | 3914 |
| PP (MFI 10) | 33.18 | 3118 |
| PP/45% Paper (CCA treated) | 34.77 | 3090 |

### Example 7: A composite structure made from treated newsprint, PVC/ABS/PE/PS by simple mixing at ambient temperature, and reinforced skin made from unsaturated polyester/glass material.

A mixture of Derakane^{®} (510A-40 by Dow), 1% (w/w) dicumyl peroxide and 5% (w/w) antimony trioxide were applied over a nonwoven E-glass (Owens, 255 gr/m²). A composite material obtained as in example 1 is laminated by the pre-preg (a tissue of reinforced fiber, impregnated by theroset resin in α-stage or β-stage) at a temperature of 165°C resulting in a sandwich structure shown in figure 2. The physical properties of the resulting structure are: Flexural strength of 60.31 MPa, flexural modulus of 4468 MPa and the impact is 2 times better than the original core. Flame resistance: the original core material is burning after ignition of 15 seconds. The unreinforced version (Derakane skin over standard core), burn for 10 seconds, and fire was running into the cracks on surface. The reinforced version stopped fire immediately after the flame was removed (V-0).

### Example 8: Composite material made from semi flexible, low cost CCA treated newsprint and HDPE scrap (Reference to Cycletec compound CD-104).

CCA composition: 300 gr of unsaturated polyester (resin 44383 by Reichhold) + 300 gr unsaturated polyester (resin 31830 by Reichhold) 100 gr MDI isocyanate resin (Desmodur 44/20 MDI by Bayer) + 7 gr dicumyl peroxide + 100 gr butyl acetate. The CCA was sprayed by airless atomizer onto 10 kg paper (2 mm dry newsprint chips) during mixing in planetary mixer. The mixture was mixed for further 10 minutes, and dried at 100°C for 4 hrs. The treated paper powder were mixed with HDPE scrap derived from bottles as granules (from Amnir, Israel) at a ratio of 30 weight CCA treated paper and 70 weight plastic in a co-rotating twin screw extruder (Sinoalloy, 50 mm, temp. 150-230°C down the extruder) into 3 mm diameter strands and cut to 3-5 mm pellets. The pellets were dried at 100°C for 12 hrs, then injection molded by standard machine to give dog-bone shaped samples with very smooth consistency with no burning of paper. The properties of the resulting composites are summarized below:

| **Flexural strength (MPa)** | **Flexural Modulus (MPa)** | **Tensile strength (MPa)** | **Tensile Modulus (MPa)** | **Elongation at break %** | **Notched Izod Impact (J/m)** | **applications** |
|---|---|---|---|---|---|---|
| 35-40 | 1500-2500 | 20-25 | 1500-2500 | 3-5 | 70-110 | Injection molding, extrusion, compression molding |

### Example 9: A composite material made from 25% CCA treated newsprint and 75% PP copolymer for automotive interior trims (Reference to Cycletec compound CD-69)

CCA composition: 600 gr of unsaturated polyester (resin 555 by Makhteshim) + 100 gr MDI isocyanate resin (Desmodur 44/20 MDI by Bayer) + 7 gr dicumyl peroxide + 100 gr butyl acetate. The CCA was sprayed by airless atomizer onto 10 kg paper (2-5 mm dry newsprint chips) during mixing in a planetary mixer. The mixture was mixed for further 10 minutes and dried at 100°C for 4 hrs. The treated newsprint chips were mixed with plastic granules of PP copolymer (Capilene SU 75AV by Carmel olefins, Israel) at a ratio of 25% weight newsprint and 75% weight plastic in co-rotating twin screw extruder (Sinoalloy, 50 mm, temp. 150-200 C along the extruder) into 3 mm diameter strands and cut to 3-5 mm pellets. The pellets were dried at 100°C for 12 hrs, then injection molded by standard machine to give dog-bone shaped samples with very smooth consistency with no burning of paper. The properties of the molded sheets are summarized below:

| **Flexural strength (MPa)** | **Flexural Modulus (MPa)** | **Tensile strength (MPa)** | **Tensile Modulus (MPa)** | **Elongation at break** % | **Notched Izod Impact (J/m)** | **applications** |
|---|---|---|---|---|---|---|
| 35-45 | 2200-2500 | 23-26 | 2800-4600 | 2-5 | 40-50 | Injection-molding, compression molding |

The impact was also tested by falling dart apparatus (Dynatup machine, ASTM D-3763-00). The results are summarized in the table below:

| Formulation | Thickness | Energy to max. load (joule) | Energy to break (joule) |
|---|---|---|---|
| CD-69, 230°C molding temperature | 4.1672 | 5.9606 | 6.9723 |
| CD-69, 210°C molding temperature | 3.7451 | 6.9072 | 9.0278 |
| SU75AV, 230°C molding temperature | 3.8061 | 7.1569 | 8.3420 |

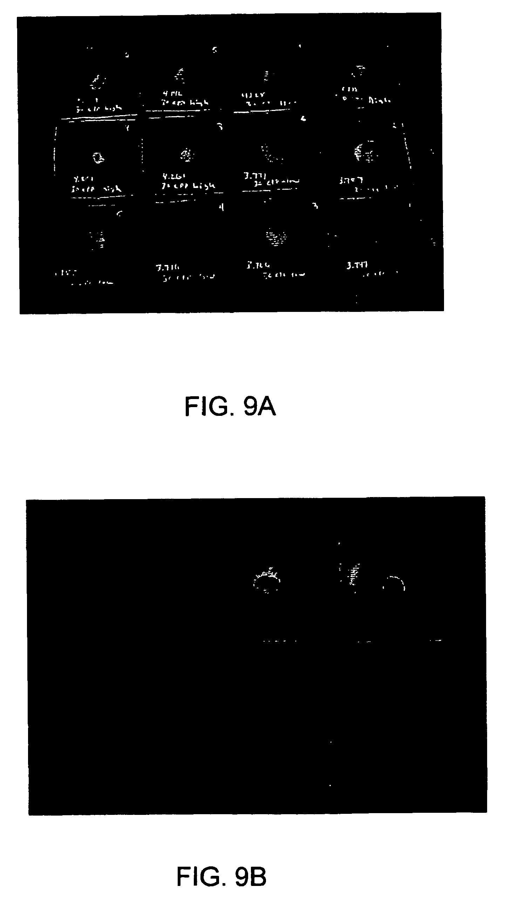

It is evident that the introduction of short newsprint fibers into the PP matrix caused minor deterioration in the impact resistance. Lower temperature molding gives better properties, due to the better homogeneity during flow. Another important issue is the toughness as can be seen in **Figs. 9A** and **9B****.** It is evident that cracks are propagating in catastrophic mode in the neat PP (9A), but are localized and minimized at the CCA treated paper PP composite (9B).

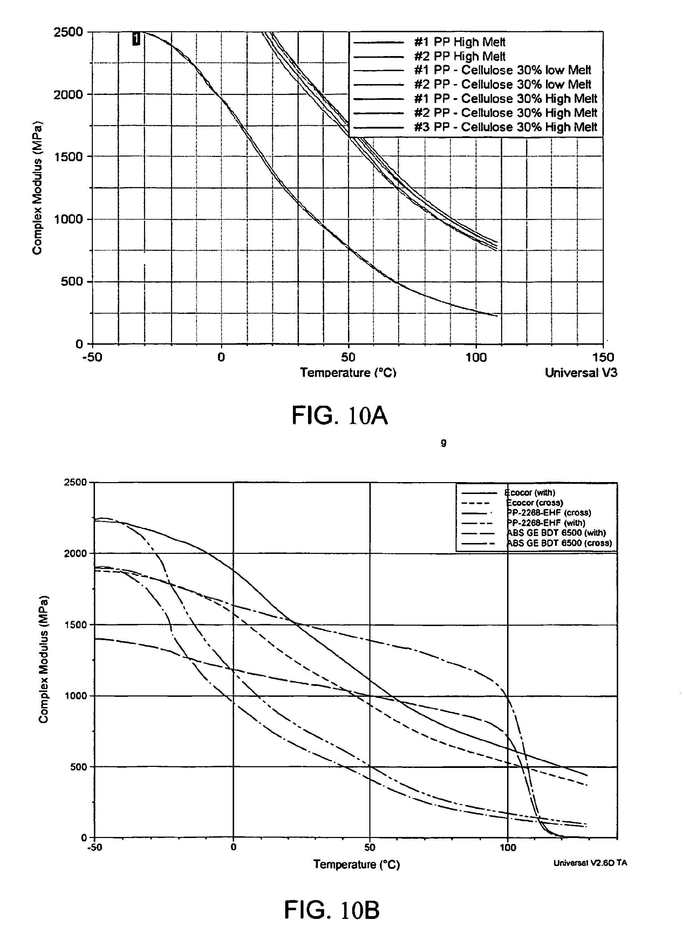

Another importand property of the CCA treated paper PP composite is the resistance to bending and deflection at elevated temperatures, an important property for automotive applications. **Figs. 10A** and **10B** show CCA treated paper PP composite has rigidity at 90°C, which is, like styrenic polymers.

Although the invention has been described in conjunction with specific embodiments, it is evident that many alternatives and variations will be apparent to those skilled in the art in light of the foregoing description. Accordingly, the invention is intended to embrace all of the alternatives and variations that fall within the scope of the appended claims.

## Claims

1. A treated fibrous porous material obtainable from an untreated porous fibrous material by treating the untreated material with a low viscosity organic solution, said low viscosity organic solution comprising:
(a) a solvent selected from aromatic, aliphatic, ether, ester, ketone, halogenated solvent or alcohol;
(b) an isocyanate component being a mono- or poly-isocyanate;
(c) anorganic-peroxide;
(d) an unsaturated resin which is hydroxyl, epoxy or carboxyl containing polyester;
wherein the untreated porous fibrous material is one or more of the group selected from cellulose, lignin, lignocellulosic material and other bio fibers and porous powders of biological origin or mixtures thereof.

2. A treated fibrous porous material according to Claim 1, wherein the low viscosity organic solution further comprises one or more compounds selected from the group consisting of styrene which may be an oligomer or polystyrene or vinyl monomer.

3. A treated fibrous porous material according to Claim 1 of 2, wherein said isocyanate component is poly-isocyanate.

4. A treated fibrous porous material according to any of Claims 1 to 3, wherein the low viscosity organic solution further comprises one or more compounds selected from the group consisting of organosilanes, organotitanium and organozirconium.

5. A treated fibrous porous material according to Claim 1, wherein the untreated porous fibrous material is cellulose based natural matter

6. A treated fibrous porous material according to Claim 5, wherein the cellulose is in the form of wood chips, recycled paper, paper chips or powder, sawdust or mixtures thereof.

7. A treated fibrous porous material according to Claim 6, wherein the untreated porous fibrous material is newsprint paper.

8. A treated fibrous porous material according to any of Claims 1 to 7, wherein the untreated porous fibrous material is 2 to 10 mm granulated chips or powder.

9. A method of treating a fibrous porous material having original reactive sites, the method comprising mixing said fibrous porous material with a low viscosity organic solution, said low viscosity organic solution comprising:
(a) a solvent selected from aromatic, aliphatic, ether, ester, ketone, halogenated solvent or alcohol;
(b) an isocyanate component being a mono- or poly-isocyanate;
(c) an organic peroxide;
(d) an unsaturated resin which is hydroxyl, epoxy or carboxyl containing polyester,
wherein the untreated porous fibrous material is one or more of the group selected from cellulose, lignin, lignocellulosic material and other bio fibers and porous powders of biological origin or mixtures thereof.

10. A method according to Claim 9, wherein the low viscosity organic solution further comprises one or more compounds selected from the group consisting of styrene which may be an oligomer or polystyrene or vinyl monomer.

11. A method according to Claim 9 or 10, wherein said isocyanate component is poly-isocyanate.

12. A method according to any of Claims 9 to 11, wherein the low viscosity organic solution further comprises one or more compounds selected from the group consisting of organosilanes, organotitanium and organozirconium.

13. A composite material comprising:
a treated fibrous porous material according to any of Claims 1 to 8; and a polymer.

14. A composite material according to Claim 13, wherein said polymer is one or more of the group consisting of thermoplastic or thermosetting polymers, their mixtures or multilayered or multicomponent products or mixtures thereof.

15. A composite material according to Claim 14, wherein said polymer is one or more of the group consisting of polyethylene and copolymers thereof, polypropylene and copolymers thereof, polystyrene and copolymers thereof, polycarbonate, silicones and copolymers thereof, polybutylene, polyethyleneterephthalate, polyurethane, epoxy resins, unsaturated polyesters, vinyl ester and ether resins, acrylic resins and copolymers thereof, polyamides, phenolic resins, amino resins, alkyd resins, polyimides, polyethers, polyvinyl chloride and copolymers thereof, and mixtures thereof.

16. A composite material according to claim 15, wherein the polyamide is nylon.

17. A composite material according to any of Claims 13 to 15, wherein said polymer is from industrial or domestic waste.

18. A method for preparing a composite material comprising a fibrous porous material and a polymer, the method comprising:
(i) mixing said fibrous porous material with a low viscosity organic solution, said low viscosity organic solution comprising:
(a) a solvent selected from aromatic, aliphatic, ether, ester, ketone, halogenated solvent or alcohol;
(b) an isocyanate component being a mono- or poly-isocyanate,
(c) an organic peroxide;
(d) an unsaturated resin which is hydroxyl, epoxy or carboxyl containing to yield a treated fibrous material;
wherein the untreated porous fibrous material is one or more of the group selected from cellulose, lignin, lignocellulosic material and other bio fibers and porous powders of biological origin or mixtures thereof.
(ii) mixing said treated material with the polymer,
(iii) heating the mixture to melt said polymer, and
(iv) shaping the molten composition into a desired form.

19. A method according to Claim 18, wherein the low viscosity organic solution further comprises one or more compounds selected from the group consisting of styrene which may be an oligomer or polystyrene or vinyl monomer.

20. A method according to Claim 18 or 19, wherein said isocyanate component is poly-isocyanate.

21. A method according to any of Claims 18 to 20, wherein the low viscosity organic solution further comprises one or more compounds selected from the group consisting of organosilanes, organotitanium and organozircomum.

22. A method according to any of claims 18 to 21, comprising a step of drying the treated fibrous material prior to its mixing with the polymer.

23. A method according to any of Claims 19 to 22, wherein steps (ii) to (iv) are carried out in an extrusion fashion.

24. A product obtainable from a composite material according to any one of Claims 13 to 17 or prepared by the method of any one of Claims 18 to 23.

25. A product according to Claim 24, being an in-line extrusion product, an in-line injection product or pellets.

26. A product according to Claim 25, being a plate, a board, a transportation pallet, a film, an automotive interior trim or a construction element.

27. A preform obtainable from the composite of any of Claims 13 to 17, by shaping into a mold, roll or continuous belt, to yield a sheet made of said composite material, or by impregnating said composite into a woven or nonwoven fabric, to yield a sheet made of said fabric and said composite material.

28. A composite structure obtainable by heating at least one preform of Claim 27 to a softening point and pressing the pre-heated sheet in a mold, or obtainable by heating two or more different reforms of Claim 27 to a softening point and pressing the pre-heated sheets in a mold, to give a multilayered structure.

29. A composite structure according to Claim 28 wherein the softening point is from about 130°C to about 230°C.

## Patentansprüche

1. Behandeltes poröses Fasermaterial, erhältlich von einem unbehandelten porösen Fasermaterial durch Behandeln des unbehandelten Materials mit einer organischen Lösung mit niedriger Viskosität, wobei die organische Lösung mit niedriger Viskosität umfasst:
(a) ein Lösungsmittel, ausgewählt aus einem Aromaten, Aliphaten, Ether, Ester, Keton, halogenierten Lösungsmittel oder Alkohol;
(b) eine Isocyanatkomponente, welche ein Mono- oder Polyisocyanat ist;
(c) ein organisches Peroxid;
(d) ein ungesättigtes Harz, welches ein Hydroxyl, Epoxy oder Carboxyl enthaltender Polyester ist;
wobei das unbehandelte poröse Fasermaterial eines oder mehrere aus Cellulose, Lignin, Lignocellulosematerial und anderen Biofasern und porösen Pulvern biologischen Ursprungs oder Gemischen davon ist.

2. Behandeltes poröses Fasermaterial gemäß Anspruch 1, wobei die organische Lösung mit niedriger Viskosität ferner eine oder mehrere Verbindungen, ausgewählt aus Styrol, welches ein Oligomer sein kann, oder Polystyrol oder einem Vinylmonomer, umfasst.

3. Behandeltes poröses Fasermaterial gemäß Anspruch 1 oder 2, wobei die Isocyanatkomponente Polyisocyanat ist.

4. Behandeltes poröses Fasermaterial gemäß einem der Ansprüche 1 bis 3, wobei die organische Lösung mit niedriger Viskosität ferner eine oder mehrere Verbindungen, ausgewählt aus Organosilanen, Organotitan und Organozirkon, umfasst.

5. Behandeltes poröses Fasermaterial gemäß Anspruch 1, wobei das unbehandelte poröse Fasermaterial ein auf Cellulose basierendes Naturmaterial ist.

6. Behandeltes poröses Fasermaterial gemäß Anspruch 5, wobei die Cellulose in Form von Holzschnitzel, recyceltem Papier, Papierschnitzel oder -pulver, Sägemehl oder Gemischen davon vorliegt.

7. Behandeltes poröses Fasermaterial gemäß Anspruch 6, wobei das unbehandelte poröse Fasermaterial Zeitungspapier ist.

8. Behandeltes poröses Fasermaterial gemäß einem der Ansprüche 1 bis 7, wobei das unbehandelte poröse Fasermaterial 2 bis 10 mm granulierte Schnitzel oder Pulver ist.

9. Verfahren zum Behandeln eines porösen Fasermaterials mit anfänglichen reaktiven Stellen, wobei das Verfahren das Mischen des porösen Fasermaterials mit einer organischen Lösung mit niedriger Viskosität umfasst, wobei die organische Lösung mit niedriger Viskosität umfasst:
(a) ein Lösungsmittel, ausgewählt aus einem Aromaten, Aliphaten, Ether, Ester, Keton, halogenierten Lösungsmittel oder Alkohol;
(b) eine Isocyanatkomponente, welche ein Mono- oder Polyisocyanat ist;
(c) ein organisches Peroxid;
(d) ein ungesättigtes Harz, welches ein Hydroxyl, Epoxy oder Carboxyl enthaltender Polyester ist;
wobei das unbehandelte poröse Fasermaterial eines oder mehrere aus Cellulose, Lignin, Lignocellulosematerial und anderen Biofasern und porösen Pulvern biologischen Ursprungs oder Gemischen davon ist.

10. Verfahren gemäß Anspruch 9, wobei die organische Lösung mit niedriger Viskosität ferner eine oder mehrere Verbindungen, ausgewählt aus Styrol, welches ein Oligomer sein kann, oder Polystyrol oder einem Vinylmonomer, umfasst.

11. Verfahren gemäß Anspruch 9 oder 10, wobei die Isocyanatkomponente Polyisocyanat ist.

12. Verfahren gemäß einem der Ansprüche 9 bis 11, wobei die organische Lösung mit niedriger Viskosität ferner eine oder mehrere Verbindungen, ausgewählt aus Organosilanen, Organotitan und Organozirkon, umfasst.

13. Verbundmaterial, umfassend:
ein behandeltes poröses Fasermaterial gemäß einem der Ansprüche 1 bis 8 und ein Polymer.

14. Verbundmaterial gemäß Anspruch 13, wobei das Polymer eines oder mehrere aus thermoplastischen oder wärmehärtbaren Polymeren, ihren Gemischen oder mehrschichtigen oder mehrkomponentigen Produkten oder Gemischen davon ist.

15. Verbundmaterial gemäß Anspruch 14, wobei das Polymer eines oder mehrere aus Polyethylen und Copolymeren davon, Polypropylen und Copolymeren davon, Polystyrol und Copolymeren davon, Polycarbonat, Siliconen und Copolymeren davon, Polybutylen, Polyethylenterephthalat, Polyurethan, Epoxyharzen, ungesättigten Polyestern, Vinylester- und -etherharzen, Acrylharzen und Copolymeren davon, Polyamiden, Phenolharzen, Aminoharzen, Alkydharzen, Polyimiden, Polyethern, Polyvinylchlorid und Copolymeren davon und Gemischen davon ist.

16. Verbundmaterial gemäß Anspruch 15, wobei das Polyamid Nylon ist.

17. Verbundmaterial gemäß einem der Ansprüche 13 bis 15, wobei das Polymer aus Industrie- oder Hausabfall stammt.

18. Verfahren zur Herstellung eines Verbundmaterials, umfassend ein poröses Fasermaterial und ein Polymer, wobei das Verfahren umfasst:
(i) Mischen des porösen Fasermaterials mit einer organischen Lösung mit niedriger Viskosität, wobei die organische Lösung mit niedriger Viskosität umfasst:
(a) ein Lösungsmittel, ausgewählt aus einem Aromaten, Aliphaten, Ether, Ester, Keton, halogenierten Lösungsmittel oder Alkohol;
(b) eine Isocyanatkomponente, welche ein Mono- oder Polyisocyanat ist;
(c) ein organisches Peroxid;
(d) ein ungesättigtes Harz, welches ein Hydroxyl, Epoxy oder Carboxyl enthaltender Polyester ist;
wobei das unbehandelte poröse Fasermaterial eines oder mehrere aus Cellulose, Lignin, Lignocellulosematerial und anderen Biofasern und porösen Pulvern biologischen Ursprungs oder Gemischen davon ist; um ein behandeltes Fasermaterial zu erhalten;
(ii) Mischen des behandelten Materials mit dem Polymer;
(iii) Erwärmen des Gemischs, um das Polymer zu schmelzen; und
(iv) Formen der geschmolzenen Zusammensetzung in eine gewünschte Form.

19. Verfahren gemäß Anspruch 18, wobei die organische Lösung mit niedriger Viskosität ferner eine oder mehrere Verbindungen, ausgewählt aus Styrol, welches ein Oligomer sein kann, oder Polystyrol oder einem Vinylmonomer, umfasst.

20. Verfahren gemäß Anspruch 18 oder 19, wobei die Isocyanatkomponente Polyisocyanat ist.

21. Verfahren gemäß einem der Ansprüche 18 bis 20, wobei die organische Lösung mit niedriger Viskosität ferner eine oder mehrere Verbindungen, ausgewählt aus Organosilanen, Organotitan und Organozirkon, umfasst.

22. Verfahren gemäß einem der Ansprüche 18 bis 21, umfassend einen Schritt des Trocknens des behandelten Fasermaterials vor dessen Mischen mit dem Polymer.

23. Verfahren gemäß einem der Ansprüche 19 bis 22, wobei die Schritte (ii) bis (iv) durch Extrusion durchgeführt werden.

24. Produkt, erhältlich durch ein Verbundmaterial gemäß einem der Ansprüche 13 bis 17 oder hergestellt gemäß dem Verfahren gemäß einem der Ansprüche 18 bis 23.

25. Produkt gemäß Anspruch 24, welches ein in-line-Extrusionsprodukt, ein in-line-Injektionsprodukt oder Pellets ist.

26. Produkt gemäß Anspruch 25, welches eine Platte, ein Brett, eine Transportpalette, eine Folie, eine Autoinnenausstattung oder ein Konstruktionselement ist.

27. Vorform, erhältlich von dem Verbundmaterial gemäß einem der Ansprüche 13 bis 17 durch Formen in eine Form, auf eine Rolle oder ein Förderband, um eine Bahn zu erhalten, welche aus dem Verbundmaterial hergestellt ist, oder durch Imprägnieren des Verbundmaterials in ein Gewebe oder Vlies, um eine Bahn zu erhalten, welche aus dem Gewebe und dem Verbundmaterial hergestellt ist.

28. Verbundstruktur, erhältlich durch Erwärmen mindestens einer Vorform gemäß Anspruch 27 auf einen Erweichungspunkt und Pressen der vorgewärmten Bahn in eine Form, oder erhältlich durch Erwärmen von zwei oder mehreren verschiedenen Vorformen gemäß Anspruch 27 auf einen Erweichungspunkt und Pressen der vorgewärmten Bahnen in eine Form, um eine Mehrschichtstruktur zu erhalten.

29. Verbundstruktur gemäß Anspruch 28, wobei der Erweichungspunkt etwa 130°C bis etwa 230°C beträgt.

## Revendications

1. Matériau fibreux poreux traité pouvant être obtenu à partir d'un matériau fibreux poreux non traité en traitant le matériau non traité avec une solution organique de basse viscosité, ladite solution organique de basse viscosité comprenant :
(a) un solvant choisi parmi un solvant aromatique, aliphatique, éther, ester, cétone, halogéné ou un alcool ;
(b) un composant isocyanate étant un mono- ou poly-isocyanate ;
(c) un peroxyde organique ;
(d) une résine insaturée qui est un polyester contenant des groupes hydroxyle, époxy ou carboxyle ;
dans lequel le matériau fibreux poreux non traité est un ou plusieurs matériaux choisis dans le groupe constitué de la cellulose, la lignine, un matériau lignocellulosique et autres fibres bio et des poudres poreuses d'origine biologique ou leurs mélanges.

2. Matériau fibreux poreux traité selon la revendication 1, dans lequel la solution organique de basse viscosité comprend, en outre, un ou plusieurs composés choisis dans le groupe constitué du styrène qui peut être un oligomère ou un polystyrène, ou un monomère vinylique.

3. Matériau fibreux poreux traité selon la revendication 1 ou 2, dans lequel ledit composant isocyanate est un poly-isocyanate.

4. Matériau fibreux poreux traité selon l'une quelconque des revendications 1 à 3, dans lequel la solution organique de basse viscosité comprend, en outre, un ou plusieurs composés choisis dans le groupe constitué des organosilanes, de l'organotitane et de l'organozirconium.

5. Matériau fibreux poreux traité selon la revendication 1, dans lequel le matériau fibreux poreux non traité est une matière naturelle à base de cellulose.

6. Matériau fibreux poreux traité selon la revendication 5, dans lequel la cellulose est sous la forme de copeaux de bois, de papier recyclé, de copeaux ou de poudre de papier, de sciure ou de mélanges de ceux-ci.

7. Matériau fibreux poreux traité selon la revendication 6, dans lequel le matériau fibreux poreux non traité est le papier journal.

8. Matériau fibreux poreux traité selon l'une quelconque des revendications 1 à 7, dans lequel le matériau fibreux poreux non traité est des copeaux granulés de 2 à 10 mm ou une poudre.

9. Procédé de traitement d'un matériau fibreux poreux ayant des sites réactifs originaux, le procédé comprenant le mélange dudit matériau fibreux poreux avec une solution organique de basse viscosité, ladite solution organique de basse viscosité comprenant :
(a) un solvant choisi parmi un solvant aromatique, aliphatique, éther, ester, cétone, halogéné ou un alcool ;
(b) un composant isocyanate étant un mono- ou poly-isocyanate ;
(c) un peroxyde organique ;
(d) une résine insaturée qui est un polyester contenant des groupes hydroxyle, époxy ou carboxyle ;
dans lequel le matériau fibreux poreux non traité est un ou plusieurs matériaux choisis dans le groupe constitué de la cellulose, la lignine, un matériau lignocellulosique et autres fibres bio et des poudres poreuses d'origine biologique ou leurs mélanges.

10. Procédé selon la revendication 9, dans lequel la solution organique de basse viscosité comprend, en outre, un ou plusieurs composés choisis dans le groupe constitué du styrène qui peut être un oligomère ou un polystyrène, ou un monomère vinylique.

11. Procédé selon la revendication 9 ou 10, dans lequel ledit composant isocyanate est un poly-isocyanate.

12. Procédé selon l'une quelconque des revendications 9 à 11, dans lequel la solution organique de basse viscosité comprend, en outre, un ou plusieurs composés choisis dans le groupe constitué des organosilanes, de l'organotitane et de l'organozirconium.

13. Matériau composite comprenant :
un matériau fibreux poreux traité selon l'une quelconque des revendications 1 à 8 ; et un polymère.

14. Matériau composite selon la revendication 13, dans lequel ledit polymère est un ou plusieurs composants choisis dans le groupe constitué des polymères thermoplastiques ou thermodurcissables, leurs mélanges ou des produits ou mélanges de ceux-ci multicouches ou multicomposants.

15. Matériau composite selon la revendication 14, dans lequel ledit polymère est un ou plusieurs composants choisis dans le groupe constitué du polyéthylène et de ses copolymères, du polypropylène et de ses copolymères, du polystyrène et de ses copolymères, du polycarbonate, des silicones et de leurs copolymères, du polybutylène, du téréphtalate de polyéthylène, du polyuréthanne, des résines époxy, des polyesters insaturés, des résines de type ester et éther de vinyle, des résines acryliques et de leurs copolymères, des polyamides, des résines phénoliques, des résines amino, des résines alkydes, des polyimides, des polyéthers, du polychlorure de vinyle et de ses copolymères, et de leurs mélanges.

16. Matériau composite selon la revendication 15, dans lequel le polyamide est le Nylon.

17. Matériel composite selon l'une quelconque des revendications 13 à 15, dans lequel ledit polymère est un rebut industriel ou domestique.

18. Procédé de préparation d'un matériau composite comprenant un matériau fibreux poreux et un polymère, le procédé comprenant :
(i) le mélange dudit matériau fibreux poreux avec une solution organique de basse viscosité, ladite solution organique de basse viscosité comprenant :
(a) un solvant choisi parmi un solvant aromatique, aliphatique, éther, ester, cétone, halogéné ou un alcool ;
(b) un composant isocyanate étant un mono- ou poly-isocyanate ;
(c) un peroxyde organique ;
(d) une résine insaturée qui est un polyester contenant des groupes hydroxyle, époxy ou carboxyle ;
dans lequel le matériau fibreux poreux non traité est un ou plusieurs matériaux choisis dans le groupe constitué de la cellulose, la lignine, un matériau lignocellulosique et autres fibres bio et des poudres poreuses d'origine biologique ou leurs mélanges, pour obtenir un matériau fibreux traité ;
(ii) le mélange dudit matériau traité avec le polymère ;
(iii) le chauffage du mélange pour faire fondre ledit polymère ; et
(iv) la mise en forme de la composition fondue selon une forme souhaitée.

19. Procédé selon la revendication 18, dans lequel la solution organique de basse viscosité comprend, en outre, un ou plusieurs composés choisis dans le groupe constitué du styrène qui peut être un oligomère ou un polystyrène ou un monomère de vinyle.

20. Procédé selon la revendication 18 ou 19, dans lequel ledit composant isocyanate est un poly-isocyanate.

21. Procédé selon l'une quelconque des revendications 18 à 20, dans lequel la solution organique de basse viscosité comprend, en outre, un ou plusieurs composés choisis dans le groupe constitué des organosilanes, de l'organotitane et de l'organozirconium.

22. Procédé selon l'une quelconque des revendications 18 à 21, comprenant une étape de séchage du matériau fibreux traité avant son mélange avec le polymère.

23. Procédé selon l'une quelconque des revendications 19 à 22, dans lequel les étapes (ii) à (iv) sont mises en oeuvre par extrusion.

24. Produit pouvant être obtenu à partir d'un matériau composite selon l'une quelconque des revendications 13 à 17 ou préparé par le procédé selon l'une quelconque des revendications 18 à 23.

25. Produit selon la revendication 24, qui est un produit d'extrusion en-ligne, un produit d'injection en-ligne ou des pastilles.

26. Produit selon la revendication 25, qui est une plaque, une planche, une palette de transport, un film, une garniture intérieure d'automobile ou un élément de construction.

27. Préforme pouvant être obtenue à partir du composite selon l'une quelconque des revendications 13 à 17, en le mettant en forme dans un moule, sur un rouleau ou une courroie continue, pour produire une feuille à base dudit matériau composite, ou en imprégnant ledit composite dans une étoffe tissée ou non tissée, pour produire une feuille à base de ladite étoffe et dudit matériau composite.

28. Structure composite pouvant être obtenue en chauffant au moins une préforme selon la revendication 27 jusqu'à un point de ramollissement et en comprimant la feuille préchauffée dans un moule, ou pouvant être obtenue en chauffant deux ou plusieurs préformes différentes selon la revendication 27 jusqu'à un point de ramollissement et en comprimant les feuilles préchauffées dans un moule, pour obtenir une structure multicouche.

29. Structure composite selon la revendication 28, dans laquelle le point de ramollissement est d'environ 130°C à environ 230°C.
